# EUROPÄISCHE PATENTANMELDUNG

(11) **EP 2 958 064 A1**
(43) Veröffentlichungstag der Anmeldung: **23.12.2015**
(21) Anmeldenummer: 15171763.4
(22) Anmeldetag: 12.06.2015
(51) Int. Cl.: G06Q 10/08, G06Q 50/28

(54) **VERFAHREN UND SYSTEM ZUR BEREITSTELLUNG VON GEFAHRGUTINFORMATIONEN**

(30) Priorität: 18.06.2014 DE 102014108613
(71) Anmelder: Netzgesellschaft Düsseldorf mbH, 40233 Düsseldorf (DE); Lang, Bernhard, 40591 Düsseldorf (DE)
(72) Erfinder: Lange, Bernhard, 40591 Düsseldorf (DE)
(74) Vertreter: Taruttis, Tilman

(57) **Zusammenfassung**

Die Erfindung betrifft ein System und ein zugehöriges Verfahren zum Bereitstellen von Informationen zu Gefahrgutstoffen auf mobilen Handgeräten. Das Verfahren sieht das Lesen eines Labels auf einem Gefahrgut mittels des Handgeräts vor. Dieses sendet die gelesene Information mittels einer Funkverbindung an eine zentrale Servereinheit. Die Servereinheit ermittelt Informationen zu den Gefahrstoffen, deren Label gelesen wurde, und sendet die ermittelten Informationen zur Anzeige auf dem mobilen Handgerät an dieses zurück.

## Beschreibung

Die Erfindung betrifft ein Verfahren und ein entsprechendes System mit Mitteln zur Bereitstellung von Informationen auf einem mobilen Handgerät zu Gefahrgutstoffen, wobei das mobile Handgerät die bereitgestellten Informationen insbesondere über eine Funkverbindung von einem zentralen Server abrufen und anzeigen kann.

Nach dem Stand der Technik werden unterschiedliche Stoffe und Materialien verwendet, die ein Gefährdungspotential aufweisen können. Beispielsweise werden Lacke, Verdünnungsmittel, Treibstoffe oder andere potentiell gefährliche Stoffe verwendet und typischerweise von ihrem Produktions- oder Lagerort zu ihrem Verwendungsort transportiert.

Derartige Stoffe oder Stoffgemische oder Gegenstände, welche Stoffe enthalten, von denen aufgrund ihrer Natur oder ihrer physikalischen oder chemischen Eigenschaften oder Ihres Zustands Gefahren für die öffentliche Sicherheit oder das Leben und die Gesundheit von Menschen, Tieren und Sachen ausgehen, werden dabei als Gefahrengut deklariert und müssen entsprechend ihren Eigenschaften gelagert, transportiert und verwendet werden.

In Unternehmen wird für derartige Stoffe typischerweise eine aus der Sicht des Unternehmens geschriebene und nutzungsspezifische Gefährdungsbeurteilung erstellt. Basierend auf diesen Gefährdungsbeurteilungen werden dann pro Gefahrgutstoff jeweils eine verfahrensspezifische Betriebsanweisung erstellt, welche die Handhabung, den Transport und die Verwendung des Gefahrguts beschreiben und die von den jeweils betroffenen Personen vor der Verwendung des Gefahrguts studiert werden müssen.

Diese Anweisungen müssen den Gefahrgutstoffen bei der Lagerung der Gefahrgüter, beim Transport und bei der Verwendung beigelegt werden, wobei diese nach dem Stand der Technik typischerweise als Ausdruck auf Papier gedruckt und dem Gefahrgut beigelegt sind. Dabei kann es vorkommen, dass mehrere Anweisungen für einen Gefahrgutstoff erstellt werden, beispielsweise jeweils für die Lagerung, den Transport und die Verwendung. Demzufolge kann es notwendig sein für ein Gefahrgut mehrere Anweisungen zu erstellen, die typischerweise an verschiedenen Orten verfügbar sein müssen.

Weiterhin ist zu beachten, dass Gefährdungsbeurteilungen eine begrenzte Gültigkeit aufweisen, beispielsweise ein Jahr ab Erstellung. Nach Ablauf des Gültigkeitszeitraums müssen diese hinsichtlich einer möglichen Substitution des Gefahrgutstoffes geprüft und gegebenenfalls überarbeitet, d.h. aktualisiert werden. Auf diese Weise wird für den jeweiligen Gefahrgutstoff regelmäßig geprüft, ob es für diesen möglicherweise einen besseren, d.h. umweltverträglicheren und/oder kostengünstigeren und/oder weniger gefährlichen und neueren Ersatz gibt. Dies bewirkt, dass Gefahrgutstoffe sobald als möglich durch bessere Stoffe ersetzt werden.

Diese Arbeitsschritte werden weiterhin bei einer Vielzahl von Unternehmen jeweils für eine Vielzahl von identischen Gefahrgutstoffen durchgeführt, ebenso in großen Unternehmen an mehreren Standorten für dieselben Gefahrstoffe, sodass nahezu identische Arbeitsschritte mehrfach erledigt werden.

Eine Aufgabe der Erfindung ist es, die oben geschilderten Unzulänglichkeiten abzustellen oder zumindest zu mildern.

Nachfolgend wird die Erfindung anhand von Figuren beschrieben, wobei
- Fig. 1: eine schematische Übersicht des Systems zeigt;
- Fig. 2: ein Ablaufdiagramm des Verfahrens zeigt.

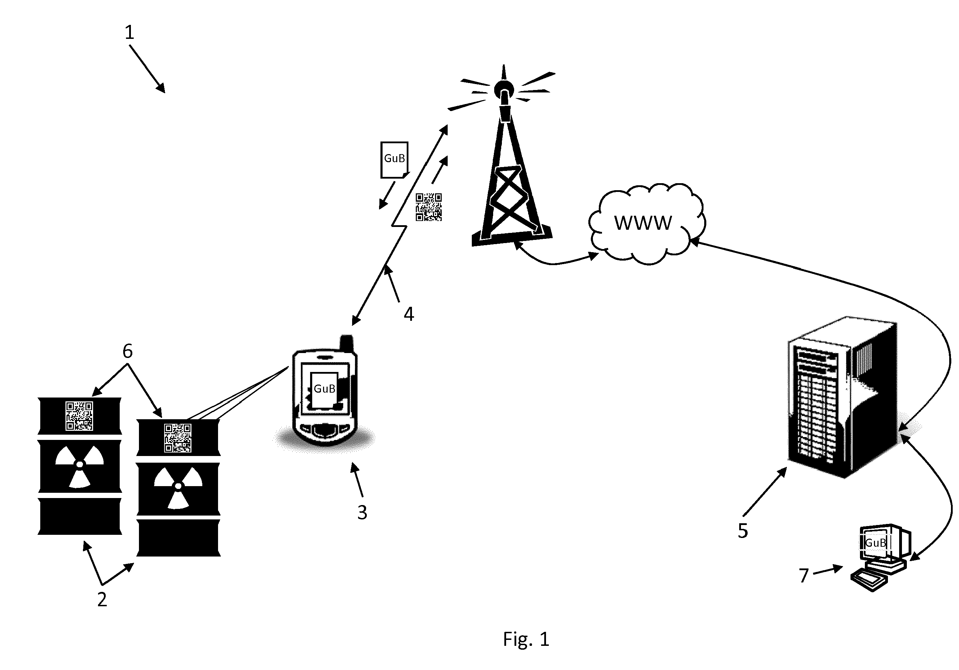

Figur 1 zeigt ein System 1 zur Bereitstellung von Informationen zu einem Gefahrgutstoff bzw. zu einem Gefahrgut 2 auf einem mobilen Handgerät 3, welches über eine Funkverbindung 4 mit einer Servereinheit 5 verbunden ist.

Das Gefahrgut 2 kann ein beliebiges Gefahrgut sein, insbesondere mit einem Gefahrgutstoff, wobei dieses ein beliebiges Gemisch oder Gemenge oder Material sein kann, wie beispielsweise ein Lack oder Verdünnungsmittel oder Treibstoff. Das Gefahrgut kann dabei insbesondere einen potentiell gefährlichen Gefahrgutstoff aufweisen, für den eine jeweilige Gefährdungsbeurteilung zu beachten ist. Gefahrgutstoffe können dabei in verschiedenen Behältnissen verpackt sein, beispielsweise in festen und formstabilen Containern wie Dosen oder Fässern, oder in flexiblen Umverpackungen wie Plastikfolien, Säcken oder Tüten.

Das Gefahrgut 2 weist auf seinem jeweiligen Behältnis ein Gefahrgut-Label 6 auf. Ein solches Gefahrgut-Label dient zur Speicherung einer eindeutigen Kennung des Gefahrguts, über die das Gefahrgut identifiziert werden kann. Das Gefahrgut-Label ist damit eine Vorrichtung, welches die Information zur eindeutigen Kennung des Gefahrguts trägt, sodass über diese Kennung weitere Informationen zu dem Gefahrgut ermittelt werden können. Weiterhin kann ein solches Gefahrgut-Label auf dem Behältnis eines Gefahrguts anbringbar sein, beispielsweise durch Aufkleben oder Aufdrucken. Das mobile Handgerät 3 ist dazu eingerichtet die eindeutige Kennung aus dem Gefahrgut-Label 6 zu ermitteln, also das Gefahrgut-Label zu lesen. Dabei kann das Gefahrgut-Label in einer Ausführungsform ein Strichcode, d.h. ein sogenannter Barcode, sein. Derartige Strichcodes sowie die zum Lesen nötigen Mittel sind per se bekannt. Ein Ausdruck eines solchen Strichcodes kann in einer Ausführungsform in Form eines Aufklebers an dem Behälter befestigt sein, alternativ kann der Behälter direkt mit dem Strichcode bedruckt sein. Das mobile Handgerät 3 kann zum Lesen des Strichcodes eine Kamera sowie ein zur Erkennung des Strichcodes geeignetes Auswerteprogramm aufweisen, sodass mit dem mobilen Handgerät der Strichcode als Bild erfasst und von dem Auswerteprogramm verarbeitet, d.h. erkannt werden kann.

Alternativ zu Strichcodes können sogenannte und an sich bekannte QR-Codes als Gefahrgut-Label 6 verwendet werden. Ein solcher QR-Code besteht im Wesentlichen aus einer quadratischen Matrix aus schwarzen und weißen Punkten, welche die kodierten Daten, d.h. die von dem Gefahrgut-Label lesbaren Informationen, binär darstellen. Da QR-Codes eine größere Datenmenge speichern können als beispielsweise Strichcodes, können detailliertere Informationen gespeichert werden. In einer Ausführungsform kann ein QR-Code beispielsweise die eindeutige Kennung des Gefahrguts speichern, gleichzeitig jedoch auch direkte Hinweise auf das von einem Gefahrgut möglicherweise ausgehende Gefährdungspotential. Dies kann insbesondere in Situationen von Vorteil sein, bei denen eine Funkverbindung zu der Servereinheit nicht hergestellt werden kann. Rudimentäre Informationen, wie beispielsweise ein Hinweis im Klartext auf die Giftigkeit oder eine Explosionsgefahr des Gefahrgutstoffs, können dann in Kurzform direkt aus dem QR-Code gelesen werden.

In einer weiteren alternativen Ausführungsform kann das Gefahrgut-Label ein sogenannter RFID-Chip sein. Der RFID-Chip, umgangssprachlich auch Funketikett genannt, ist dabei ein passiver Transponder, der auf magnetische Wechselfelder oder Radiowellen, also Funksignale, mit typischerweise geringer Reichweite reagiert. Derartige RFID-Transponder sowie entsprechende Vorrichtungen und Verfahren zum Lesen der auf einem RFID-Transponder gespeicherten Information sind per se bekannt. Im Wesentlichen umfassen derartige Transponder eine Antenne zum Empfangen des Funksignals, eine analoge Ein-Ausgangsstufe zum Empfangen und Senden sowie typischerweise einen digitalen Schaltkreis, der typischerweise einen permanenten, also nicht-flüchtigen, Speicher umfasst, sodass die in dem Speicher gespeicherten Informationen mittels der Ein-Ausgangsstufe gesendet werden können. In an sich bekannter Weise kann die Antenne in einer Ausführungsform nicht nur zum Empfang von Informationssignalen dienen, sondern auch zur Einspeisung von Energie über die empfangenen Funkwellen, sodass der RFID-Transponder keinen Energiespeicher aufweist. In einer alternativen Ausführungsform kann der RFID-Transponder einen Energiespeicher aufweisen, der den gesamten RFID-Transponder oder alternative nur den digitalen Schaltkreis mit Energie versorgt, sodass größere Funkreichweiten möglich sind.

In einer weiteren alternativen Ausführungsform kann das Gefahrgut-Label ein Chip gemäß dem Nahfeldkommunikationsstandard sein, englisch 'near field communication' NFC, wobei ein Datenaustausch verbindungslos, also mit passiven HF-RFID Tags, oder verbindungsbehaftet sein kann, also zwischen gleichwertigen aktiven Transceivern stattfinden kann.

Das mobile Handgerät 3 weist Mittel zum berührungslosen Lesen, also zum berührungslosen Ermitteln der in einem Gefahrgut-Label 2 gespeicherten Information auf, weiterhin ein Mittel zum Anzeigen von Informationen zu Gefahrgutstoffen sowie ein Mittel zum Übertragen von Informationen über eine Funkverbindung 4 zu einer Servereinheit 5.

Das mobile Handgerät 3 kann in einer Ausführungsform ein sogenannter Handscanner zum Erfassen von optischen Codes, beispielsweise den oben genannten Strich- oder QR-Codes, oder zum Auslesen von RFID- oder anderen Sende-/Empfängern per Funk sein, sofern der Handscanner weiterhin ein entsprechendes Mittel zum Übertragen der gelesenen Information des Labels und ein Anzeigemittel zum Anzeigen von Informationen zu einem Gefahrgut aufweist. Alternativ kann das mobile Handgerät ein sogenanntes Smartphone oder ein Tablet-Computer sein, welche typischerweise eines der unten beschriebenen Mittel zum berührungslosen Lesen eines solchen Labels sowie zumindest eines der unten beschriebenen Mittel zum Übertragen von Informationen über eine Funkverbindung aufweisen.

Das Mittel zum berührungslosen Lesen eines Gefahrgut-Labels 2 kann in einer Ausführungsform eine Vorrichtung zur Erfassung eines Strichcodes mittels eines (Laser-)Lichtstrahls sein, mit welchem ein Strichcode abgetastet wird. In einer alternativen Ausführungsform kann das Mittel eine Kamera zum Ablichten eines Strich- oder QR- oder eines anderen optisch erfassbaren Codes sein, wobei das Mittel eine Einrichtung zur Auswertung des optisch erfassten Codes umfasst, sodass die Ablichtung des Codes zu binär verarbeitbaren Daten ausgewertet werden kann. In einem Ausführungsbeispiel kann die Kamera diejenige eines Smartphones, eines Tablet-Computers, eines PDA oder eines herkömmlichen Laptops sein. Die Einrichtung zur Auswertung des optisch erfassten Codes kann dabei ein auf dem jeweiligen Gerät ablaufendes Softwareprogramm sein, welches das von der Kamera gelieferte Bild, i.e. die Ablichtung, auswertet und die aus dem optischen Code ermittelten Daten dem mobilen Handgerät zur Verfügung stellt, sodass ein oder das auf dem Handgerät ablaufende Programm die ausgelesene Information weiter verarbeiten kann.

Alternativ oder zusätzlich kann das Mittel zum berührungslosen Lesen eines Gefahrgut-Labels eine Vorrichtung zum Auslesen eines RFID-Chips oder eines NFC-Chips aufweisen. Derartige Vorrichtungen zum Auslesen eines RFID-Chips, d.h. RFID-Lesegeräte mit der dazugehörigen Software zur Erzeugung der notwendigen Sendesignale und zum Auswerten der empfangenen Antwortnachrichten sind per se bekannt und können in an sich bekannter Weise in Handgeräte, beispielsweise Smartphones integriert werden. So sind derzeit Smartphones und/oder Tablet-Computer im Markt erhältlich, welche die Funktionalität zur Kommunikation per NFC aufweisen.

Das Handgerät 3 weist weiterhin ein Mittel zum Übertragen und dementsprechenden Empfangen von Information über eine Funkverbindung auf. Ein solches Mittel kann eine Einrichtung zum Senden und Empfangen per WLAN-Protokoll, d.h. gemäß der Protokollgruppe IEEE 802.11, oder per Mobilfunk, d.h. beispielsweise gemäß GSM- oder UMTS- oder LTE-Standard sein. Entsprechende Module können in an sich bekannter Weise in ein Handgerät integriert werden. So weisen herkömmliche Smartphones oder PDAs oder Tablet-Computer typischerweise mindestens eines dieser Module auf, sodass diese per WLAN oder über ein zellulares Mobilfunknetz Daten mit einem Netzwerk austauschen können.

Das Mittel zur Anzeige der Informationen zu einem Gefahrgut oder Gefahrgutstoff kann das Display des Handgeräts sein, beispielsweise das Display eines Handscanners oder eines Smartphones oder eines Tablet-Computers. In Ergänzung dazu kann das Handgerät eine Vorrichtung zur Ausgabe eines akustischen Warntons oder eine Einrichtung zum Erzeugen eines haptischen Signals, beispielsweise Vibration, aufweisen, sodass das Gerät Warntöne erzeugen oder vibrieren kann.

Optional kann das Handgerät ein Mittel zur Ermittlung der geographischen Position des Handgeräts aufweisen. Ein solches Mittel kann ein an sich bekannter NAVSTAR-GPS- oder GLONASS-Empfänger sein, der die geographische Position des Empfängers bereitstellt.

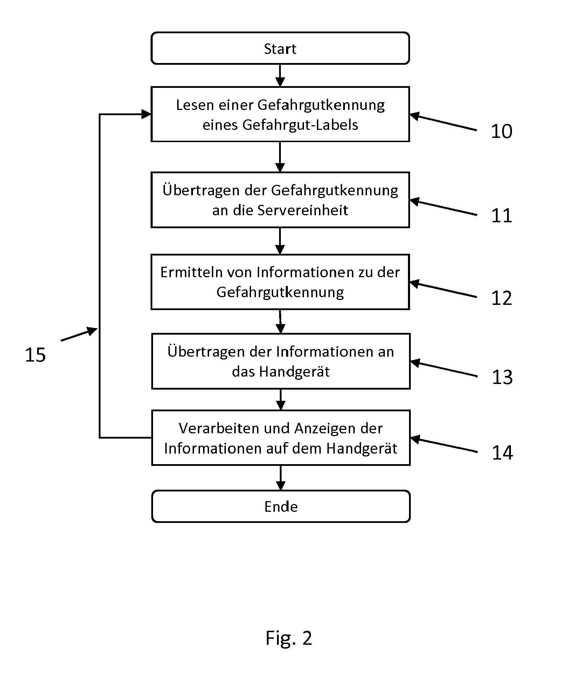

Schließlich weist das Handgerät noch ein geeignetes Computerprogramm auf, welches die oben beschriebenen Mittel ansteuern kann und dazu eingerichtet ist, die in Figur 2 dargestellten Verfahrensschritte auszuführen. Dabei kann das Computerprogramm in einer Ausführungsform ein Steuerungsprogramm eines speziellen Handgeräts sein. Alternativ kann das Programm ein solches für ein sogenanntes Smartphone oder einen Tablet-Computer sein, welches das Funkmodul und/oder die Kamera sowie das Display und den Prozessor ansteuern kann.

Die Funkverbindung 4 kann dementsprechend eine Verbindung per WLAN-Protokoll oder alternativ eine Verbindung über ein Mobilfunknetz sein, wobei die Verbindung 4 dazu eingerichtet ist, eine Kommunikationsverbindung zu der Servereinheit 5 herzustellen. Dabei kann die Verbindung 4 zu dem Handgerät 3 eine Funkverbindung sein, wobei die netzwerkseitige Verbindung eine an sich bekannte kabelgebundene Verbindung beispielsweise über das Internet zu der Servereinheit 5 umfassen kann.

Die Servereinheit 5 kann aus einem oder mehreren Computern bestehen. Auf diesen Computern, d.h. in der Servereinheit, sind Informationen zu den Gefahrgütern und/oder einzelnen Gefahrgutstoffen so gespeichert, dass diese auf Anfrage über die Funkverbindung 4 an das Handgerät übertragen werden können.

Der Server kann zur Speicherung und Verwaltung der Informationen eine Datenbank aufweisen, in der Informationen zu Gefahrgütern und/oder einzelnen Gefahrgutstoffen abrufbar gespeichert sind. Die Informationen zu den Gefahrgütern und/oder Gefahrgutstoffen können über ein angeschlossenes Terminal 7 in die Datenbank eingegeben werden. Das Terminal kann dabei ein herkömmlicher Computer oder anderes geeignetes Gerät sein, welches in an sich bekannter Weise mit der Servereinheit vernetzt ist. Die Informationen zu einem Gefahrgut und/oder einem Gefahrgutstoff werden dabei in der Datenbank zu einer Gefahrgutkennung, die auf einem Gefahrgut-Label 6 gespeichert werden kann, hinterlegt. Dabei können zu einem Gefahrgut/Gefahrgutstoff unterschiedliche Informationen gespeichert werden. So können zu einem Gefahrgut/-stoff Informationen gespeichert sein zur Giftigkeit oder Anweisungen hinsichtlich der Handhabung oder Hinweise bezüglich der Umweltverträglichkeit oder Informationen zur Reaktionsfähigkeit mit anderen Stoffen wie beispielsweise anderen Gefahrgutstoffen.

Die zu einem Gefahrgut/Gefahrgutstoff in der Datenbank gespeicherten Daten können dabei kategorisiert gespeichert werden, sodass die unterschiedlichen Informationen über Filter ausgewählt werden können. So können Informationen zu einem Lagerort in einer ersten Kategorie, Informationen zur Giftigkeit in einer zweiten Kategorie, Informationen für eine möglicherweise notwendige Transportgenehmigung, Informationen zur Giftigkeit bzw. zur Umweltverträglichkeit, Informationen zum Lagerort sowie Informationen zum Transport, zur Verwendung oder zu Produkteigenschaften in anderen Kategorien abgelegt werden, wobei nach diesen Kategorien gefiltert werden kann.

Optional kann der Server ein Mittel zum Erstellen eines Gefahrgut-Labels umfassen. In einer Ausführungsform kann ein solches Mittel ein Drucker zum Drucken eines Strichcodes oder eines QR-Codes sein, alternativ oder zusätzlich kann der Server eine Vorrichtung zum Schreiben von Information in einen RFID- oder NFC-Chip aufweisen, sodass die Gefahrgutkennung in dem RFID-/NFC-Chip lesbar gespeichert ist.

Das System kann in vorteilhafter Weise in einer Vielzahl verschiedener Szenarien eingesetzt werden. Die nachfolgend beschriebenen Szenarien stellen dabei keine abschließende Liste, sondern nur einige Beispiele dar.

Das System kann in vorteilhafter Weise bei der Kommissionierung von Gefahrgütern und/oder Gefahrgutstoffen, also der Zusammenstellung einer Lieferung von Gefahrgütern, verwendet werden. Typischerweise besteht dabei das Problem, dass verschiedene Gefahrgüter nicht gleichzeitig in demselben Transportcontainer gelagert oder transportiert werden dürfen, weil Gefahrgüter im Falle von Undichtigkeiten der jeweiligen Einzelverpackungen in unerwünschter Weise miteinander reagieren können oder weil ein Gefahrgut nur in einer maximal zulässigen Höchstmenge pro Sammelbehälter transportiert werden kann.

In einem solchen Szenario kann ein Benutzer des Systems mittels des Handgeräts die Gefahrgut-Label 6 aller Gefahrgüter der Lieferung lesen, Figur 2 Schritt 10. Bei Strich- oder QR-Codes kann dies mittels optischer Erfassung, beispielsweise durch Ablichten des Strich- oder QR-Codes oder durch Auslesen des RFID- oder NFC-Chips des jeweiligen Gefahrguts stattfinden, welches für den Transportcontainer vorgesehen ist. Dabei ermittelt das Handgerät 3 die auf dem jeweiligen Gefahrgut-Label 6 gespeicherte Kennung des Gefahrguts und sendet diese als Request und über die Funkverbindung 4 an die Servereinheit 5. Der Server empfängt die Information und ermittelt zu einer empfangenen Kennung zugeordnete Informationen, wobei verschiedene weitere Kriterien als Filter hinzugezogen werden können. In einer Ausführungsform ermittelt der Server die zur empfangenen Kennung des Gefahrguts fest hinterlegte Informationen, formatiert diese Informationen passend für das anfragende Handgerät und sendet diese an das Handgerät zurück. Das Handgerät empfängt diese Information und zeigt diese auf dem Display an. Alternativ dazu kann ein Server in Abhängigkeit verschiedener Kriterien Informationen auswählen und an das Handgerät senden.

Da eine Lieferung unterschiedliche Gefahrgüter umfassen kann, kann in einer Ausführungsform der Server prüfen, ob die mehreren Gefahrgüter einer Lieferung, die in einem Transportcontainer transportiert werden soll, in diesem gemeinsam transportiert werden dürfen. Die Servereinheit 5 kann also eine Prüfung hinsichtlich der Zulässigkeit des gemeinsamen Transports von Gefahrgütern 2 vornehmen. Falls der Server bei einer solchen Prüfung einen Verstoß gegen eine entsprechende Regel feststellt, so kann er eine dementsprechende Nachricht an das Handgerät 3 zurücksenden. Weiterhin kann der Server prüfen, ob für den geplanten Transport eine andere Zulässigkeitsvoraussetzung erfüllt ist, beispielsweise ob eine erforderliche Transportgenehmigung vorliegt bzw. eine entsprechende Information für das Gefahrgut hinterlegt ist. In diesem Falle kann der Server auf das Fehlen oder Vorhandensein einer solchen Genehmigung hinweisen.

Weiterhin optional kann das Handgerät 3 in diesem oder anderen Szenarien eine Identifizierung des Handgeräts separat oder zusammen mit einer gelesenen Gefahrgut-Kennung an die Servereinheit übertragen, siehe 11 in Figur 2. In der Servereinheit können entsprechende Identifizierungen von Handgeräten und weitere Informationen zu den Handgeräten hinterlegt sein, sodass die Servereinheit ,weiß', mit welchem Handgerät kommuniziert wird. Eine solche Identifizierung kann dabei in einer Ausführungsform die sogenannte IMEI sein, d.h. die International Mobile Equipment Number, welche ein Mobilfunkgerät eindeutig kennzeichnet. Alternativ dazu kann bei einer Kommunikation über ein Mobilfunknetz die MSISDN, also die 'Mobile Subscriber Integrated Services Digital Network Number', d.h. die weltweit eindeutige Rufnummer, übertragen werden. So kann beispielsweise für ein bekanntes Gerät, dessen Standort bekannt ist, eine andere Filterung der zu einer Gefahrgutkennung hinterlegten Daten durchgeführt werden als für ein im System unbekanntes Gerät. Falls zu einem im System bekannten Handgerät der Standort bekannt ist, so kann weiterhin eine Filterung der zu einer Gefahrgutkennung hinterlegten Information nach dem Ort stattfinden. Bei der Kommissionierung von Gefahrgütern 2, die typischerweise an einem Warenausgang eines Lagers stattfindet, kann das Handgerät 3 im System bekannt sein, d.h. die entsprechende Gerätekennung ist in dem System zur Identifizierung hinterlegt.

Das Handgerät 3 überträgt die gelesenen Gefahrgut-Kennungen über die Funkverbindung 4 an die Servereinheit 5, wobei eine jede Gefahrgutkennung separat oder mit mehreren gelesenen Gefahrgutkennungen gemeinsam in einer Anfrage übertragen werden kann. Die Servereinheit 5 empfängt die mindestens eine Gefahrgutkennung und ermittelt die zugeordneten Informationen, siehe 12 in Figur 2, die an das Handgerät 3 zu übertragen sind. In einer Ausführungsform können dabei sämtliche Informationen, die zu einer Gefahrgutkennung in der Servereinheit gespeichert sind, an das Handgerät übertragen werden.

In einer Alternative kann die Servereinheit 5 die Informationen, die an das Handgerät 3 gesendet werden, nach verschiedenen Kriterien filtern. Falls das Handgerät 3 eine Gerätekennung übertragen hat und die Servereinheit feststellt, dass die Gerätekennung in Zusammenhang mit einer Kommissionierung am Warenausgang steht, so kann die Servereinheit prüfen, ob eine möglicherweise erforderliche Transportgenehmigung vorliegt und einen entsprechenden Hinweis übertragen, ob eine solche Genehmigung vorliegt. Falls in einem Ausführungsbeispiel nur eine bestimmte Menge des Gefahrguts mit einem einzigen Transport transportiert werden darf, so kann diese Information übertragen werden. Weiterhin kann die Servereinheit prüfen, ob die im Rahmen der Kommissionierung erfassten Gefahrgüter in einem Transport bzw. einem Container transportiert werden dürfen. Weiterhin kann die Servereinheit für ein Gefahrgut jeweils individuelle Betriebs- oder Gefahrenhinweise übertagen.

Weiterhin kann die Servereinheit prüfen, ob die notwendigen Informationen zu der übertragenen Gefahrgutkennung im System vorliegen. So kann die Servereinheit prüfen, ob eine gültige Betriebsanweisung zu dem Gefahrgut hinterlegt ist und/oder ob besondere Anweisungen zu beachten sind.

Die Servereinheit kann damit die für die erkannte Situation der Kommissionierung notwendigen und hinreichenden Informationen für jedes Gefahrgut ermitteln und diese anschließend über die Funkverbindung 4 an das Handgerät übertragen, siehe Schritt 13 in Figur 2. Die Informationen können dabei in einem Format übertragen werden, die für das anfragende Handgerät proprietär ist. Alternativ kann die Servereinheit 5 die Informationen gemäß einem bekannten und verbreiteten Standard formatieren und an das Handgerät 3 über die Funkverbindung übertagen. In einer Ausführungsform kann die Servereinheit die Informationen im HTML-Format übertragen, alternativ aus den Informationen ein Dokument im PDF-Format erzeugen oder die Informationen in einem sonstigen Format über die Funkverbindung an das Handgerät 3 übertragen.

Das Handgerät 3 empfängt die von der Servereinheit 5 übertragenen Daten und verarbeitet diese. In einer Ausführungsform zeigt das Handgerät 3 die empfangenen Informationen auf dem Anzeigemittel an. Das Anzeigemittel kann dabei der Bildschirm des Handgeräts sein. Weiterhin kann das Handgerät einen Warnton erzeugen oder vibrieren, um den Empfang der Informationen zu signalisieren oder auf eine Warnung oder eine besondere Information hinzuweisen.

Das System erlaubt damit die automatisierte Prüfung von Regeln beim Umgang mit einem jeden einzelnen Gefahrstoff, wobei gleichzeitig die Praktikabilität der Handhabung verbessert wird. Weiterhin ermöglicht das System das Lesen mehrerer Gefahrgutkennungen aus einer entsprechenden Vielzahl von Gefahrgut-Labeln, siehe Schleife 15 in Figur 2, wobei die Information zu den Gefahrgütern gegeneinander geprüft werden können, sodass die Zulässigkeit von Kombinationen von Gefahrgütern geprüft werden kann.

In einem alternativen Szenario kann das System genutzt werden, wenn das Gefahrgut auf dem Transportweg ist, also den ursprünglichen Lagerort verlassen hat. Das Handgerät 3 kann in diesem Fall insbesondere ein sogenanntes Smartphone oder ein sogenannter Tablet-Computer sein, die jeweils über die oben beschriebenen Funktionen zum Lesen eines Gefahrgut-Labels, zum Übertragen von Informationen über eine Funkverbindung sowie Mittel zum Anzeigen von empfangenen Informationen zu einem Gefahrgut aufweisen. Ein solches Szenario kann beispielsweise im Falle eines Unfalls entstehen, oder wenn aus einem anderen Grunde Informationen zu dem transportierten Gefahrgut außerplanmäßig abgerufen werden sollen. Dabei kann das Programm zur Steuerung des Handgeräts insbesondere eine über die Funkverbindung zu ladende Anwendung, eine sogenannte App, sein, die der Gerätebenutzer in einfacher Art und Weise auf sein Gerät laden kann, um anschließend die Gefahrgut-Label lesen und das System nutzen zu können.

In einem solchen Fall, d.h. auf dem Weg vom ursprünglichen Lagerort zu einem Bestimmungsort, kann ein mobiles Handgerät 3 beim Lesen eines Gefahrgut-Labels, also beim Ermitteln der Gefahrgutkennung, in vorteilhafter Weise den geographischen Ort ermitteln, an dem sich das Handgerät und folglich das Gefahrgut befindet, und mittels der Funkverbindung 4, Schritt 11 in Figur 2, an die Servereinheit 5 übertragen. Die Servereinheit 5 empfängt die Gefahrgutkennung und ermittelt die zugehörigen Informationen, wobei in einer Ausführungsform sämtliche Informationen übertragen werden können. Alternativ dazu und falls der geographische Ort mit der Gefahrgutkennung an die Servereinheit übertragen wurde, kann die Servereinheit erkennen, dass das Gefahrgut den ursprünglichen Lagerort verlassen hat und ermittelt folglich Informationen, die für den Transport oder im Falle eines Unfalls von besonderer Wichtigkeit sind. So kann die Servereinheit in einer Ausführungsform ermitteln, dass das Gefahrgut nicht an dem Orte gelagert werden darf, beispielsweise aus Umwelt- und/oder Trinkwasserschutzgründen, an dem sich das Gefahrgut zum Zeitpunkt des Lesens befunden hat. Weiterhin kann die Servereinheit insbesondere Informationen zusammenstellen und übertragen, die im Falle eines Unfalles von Bedeutung sind. Anschließend überträgt die Servereinheit die zusammengestellten Informationen an das Handgerät 3, welches die Informationen verarbeitet. Dabei kann das Verarbeiten der Informationen das Signalisieren einer Warnung umfassen, beispielsweise mittels eines Warntons oder eines Vibrationsalarms oder einer optischen Anzeige auf dem Display des Handgeräts. Auf diese Weise können Informationen in Abhängigkeit des aktuellen Ortes des Gefahrguts zusammengestellt und übertragen werden, wobei die zusammengestellten Informationen in priorisierter Reihenfolge auf dem Display des Handgeräts angezeigt werden. Beispielsweise können Gefahrenhinweise, die im Falle eines Unfalls von besonderer Bedeutung sind, beispielsweise Hinweise auf die Giftigkeit oder Entflammbarkeit besonders auffallend auf dem Display dargestellt werden, sodass diese dem Benutzer des Handgeräts sofort auffallen und diesen warnen. Auf diese Weise können beispielsweise auch Rettungskräfte im Falle eines Unfalls zügig zu einem Gefahrgut Informationen abrufen.

In einer Ausführungsform können die Gefahrgut-Label und das Handgerät so ausgebildet sein, dass zumindest ein Teil der in dem Label gespeicherten Informationen von dem Handgerät direkt und ohne das Nutzen der Funkverbindung angezeigt werden kann, sodass diese Information ohne eine Netzwerkverbindung auf dem Handgerät angezeigt werden kann. Dies erlaubt das Anzeigen von Informationen zu dem Gefahrgut auf dem Handgerät auch dann, wenn sich das Handgerät außerhalb eines Funknetzes befindet. Weiterhin ermöglicht dies die sofortige Anzeige von Informationen auf dem Handgerät, bevor die Serverseite die Informationen zu einem gelesenen Gefahrgut-Label zusammengestellt und an das Handgerät übertragen hat. So kann dieser Teil der auf dem Gefahrgut-Label gespeicherten Information auf dem Handgerät angezeigt werden, bevor die gelesene Gefahrgutkennung an die Servereinheit 5 übertragen, und von der Servereinheit zusammengestellte Informationen angezeigt werden.

Das System ermöglicht damit die Bereitstellung von Informationen zu einem Gefahrgut und/oder Gefahrgutstoff in Abweichung von einem standardisierten Ablauf, beispielsweise im Falle von Unfällen.

In einem weiteren ergänzenden Szenario kann das System Informationen liefern, wenn das Gefahrgut zu seinem Bestimmungsort transportiert wurde und dort verarbeitet wird. So kann die Servereinheit in diesem Falle bevorzugt Informationen zur Verarbeitung und Verwendung eines Gefahrguts zusammenstellen, die weder für die Kommissionierung noch für eine Unfallsituation, jedoch für eine fachgerechte Verarbeitung eines Gefahrguts relevant sind.

Das System stellt damit für einen Gefahrgutstoff bzw. für ein Gefahrgut über die Funkverbindung die im System hinterlegte Information auf dem Handgerät bereit, wobei die Informationen nach verschiedenen Kriterien gefiltert und priorisiert übertragen werden kann. Dies ermöglicht zum einen die Bereitstellung der jüngsten Informationen zu einem jeweiligen Gefahrgut und/oder Gefahrgutstoff verfügbaren Informationen, insbesondere von Gefährdungsbeurteilungen zu einem Gefahrstoff. Diese Informationen werden bei Abruf von einem Handgerät auf dieses übertragen, sodass aus der Sicht eines Unternehmens eine aktuelle nutzungs- und situationsspezifische Gefährdungsbeurteilung auf das Handgerät übertragen wird.

## Patentansprüche

1. Verfahren zur Bereitstellung von Information zu einem Gefahrgutstoff 2 auf einem mobilen Handgerät 3, wobei
- das mobile Handgerät 3 Mittel zum berührungslosen Lesen eines Gefahrgut-Labels 6 sowie Mittel zum Anzeigen von Informationen zu den Gefahrgutstoffen und Mittel zum Übertragen von Informationen über eine Funkverbindung 4 zu einer Servereinheit 5 aufweist, und wobei
- die Informationen zu den Gefahrgutstoffen in der Servereinheit 5 gespeichert sind, umfassend die folgenden Verfahrensschritte
a. berührungsloses Lesen von Information mindestens eines Gefahrgut-Labels 6 zu einem Gefahrgutstoff 2, und
b. Übertragen der mindestens einen gelesenen Information des Gefahrgut-Labels 6 von dem mobilen Handgerät 3 über die Funkverbindung 4 zu der Servereinheit 5, und
c. Übertragen von Information zu einem Gefahrgutstoff von der Servereinheit 5 über die Funkverbindung 4 zu dem mobilen Handgerät 3, und
d. Anzeigen der Information zu einem Gefahrgutstoff 2 auf dem mobilen Handgerät 3.

2. Verfahren nach Anspruch 1, mit dem weiteren Verfahrensschritt
- Eingeben von mindestens einer Information zu einem Gefahrgutstoff in die Servereinheit 5.

3. Verfahren nach einem der vorstehenden Ansprüche, mit dem weiteren Verfahrensschritt
- Ermitteln der geographischen Position des mobilen Handgeräts 3 beim Lesen der Information eines Gefahrgut-Labels 6 und
- Übertragen der ermittelten geographischen Position des mobilen Handgeräts zu der Servereinheit 5.

4. Verfahren nach Anspruch 3, mit dem weiteren Verfahrensschritt
- Auswählen der Information zu dem Gefahrgut 2 in der Servereinheit 5 in Abhängigkeit der ermittelten geographischen Position des mobilen Handgeräts 3.

5. Verfahren nach einem der vorstehenden Ansprüche, mit dem weiteren Verfahrensschritt
- Übertragen einer Identifizierung des mobilen Handgeräts 3 an die Servereinheit 5, und
- Auswählen der Information zu dem Gefahrgut 2 in der Servereinheit 5 in Abhängigkeit der übertragenen Identifizierung des mobilen Handgeräts 3.

6. Verfahren nach einem der vorstehenden Ansprüche, mit dem weiteren Verfahrensschritt
- Übertragen einer Benutzerkennung an die Servereinheit 5, und
- Auswählen der Information zu dem Gefahrgutstoff 2 in der Servereinheit 5 in Abhängigkeit der übertragenen Benutzerkennung.

7. Verfahren nach einem der vorstehenden Ansprüche, wobei das mobile Handgerät 3 vor dem Übertragen der Information des mindestens einen Gefahrgut-Labels 6 an die Servereinheit 5 zumindest einen Teil der Information anzeigt.

8. System zur Bereitstellung von Information zu einem Gefahrgutstoff 2 umfassend ein mobiles Handgerät 3 und eine Servereinheit 5, wobei
- das mobile Handgerät 3 Mittel aufweist
- zum berührungslosen Lesen der Information eines Gefahrgut-Labels 6 zu einem Gefahrstoff 2 und
- zum Übertragen der gelesenen Information über eine Funkverbindung 4 zu einer Servereinheit 5 und
- zum Empfangen von Informationen zu einem Gefahrgutstoff 2 über die Funkverbindung 4 von der Servereinheit 5 und
- zum Anzeigen der empfangenen Informationen zu dem Gefahrgutstoff 2, und wobei die Servereinheit 5 Mittel aufweist
- zum Empfangen von Informationen eines Gefahrgut-Labels 6 von dem mobilen Handgerät 3 und
- zum Auswählen von Informationen zu einem Gefahrgutstoff 2 in Abhängigkeit der empfangenen Information des Gefahrgut-Labels 6 und
- zum Übertragen der ausgewählten Informationen über die Funkverbindung 4 an das mobile Handgerät 3.

9. System nach Anspruch 8, wobei die Servereinheit 5 weiterhin Mittel aufweist
- zur Eingabe von Informationen zu einem Gefahrgutstoff 2.

10. System nach einem der Ansprüche 8-9, wobei das mobile Handgerät 3 ein Mittel zum
- Ermitteln der geographischen Position und zum
- Übertragen der ermittelten geographischen Position an die Servereinheit 5 aufweist.

11. System Anspruch 10, wobei die Servereinheit 5 Mittel zum
- Auswählen der Information zu einem Gefahrgut 2 in Abhängigkeit der ermittelten geographischen Position des mobilen Handgeräts 3 aufweist.

12. System nach einem der Ansprüche 8-11, wobei das Handgerät 3 Mittel zum
- Übertragen eine Identifizierung des mobilen Handgeräts 3 an die Servereinheit 5, und
- die Servereinheit 5 Mittel zum Auswählen der Information zu dem Gefahrgut 2 in Abhängigkeit der übertragenen Identifizierung des mobilen Handgeräts 3 aufweist.

13. System nach einem der Ansprüche 8-12, wobei das mobile Handgerät 3 eingerichtet ist vor dem Übertragen der Information des mindestens einen Gefahrgut-Labels 6 an die Servereinheit 5 zumindest einen Teil der Information anzuzeigen.
